# EUROPEAN PATENT APPLICATION

(11) **EP 1 548 704 A1**
(43) Date of publication of application: **29.06.2005**
(21) Application number: 04254287.8
(22) Date of filing: 16.07.2004
(51) Int. Cl.: G10L 13/04, G11B 27/32, G06F 17/30, G11B 27/034

(54) **Method supporting text-to-speech navigation and multimedia device using the same**

(30) Priority: 17.12.2003 KR 2003092468
(71) Applicant: Samsung Electronics Co., Ltd., Suwon-si, Gyeonggi-do 442-742 (KR)
(72) Inventor: Sihn, Kue-hwan, Siwon-si, Gyeonggi-do (KR); Kang, In-pyo, 439-704 4-danji APT, Suwon-si, Gyeonggi-do (KR)
(74) Representative: Brandon, Paul Laurence

(57) **Abstract**

A multimedia device supporting text-to-speech navigation includes a storage unit (5) operable to store and transmit at least one text-to-speech voice file generated and received from a host device as a result of analyzing at least one multimedia file and the multimedia file, a user interface processor (30) operable to provide a user interface and receive a command of a user to make it possible to search information on the file, and a data reader for reading the text-to-speech voice file from the storage unit according to a control of the user interface processor in order to output the text-to-speech voice file. Further, a method supporting text-to-speech navigation comprises analyzing information on a stored multimedia file to generate a TTS voice file, receiving the generated TTS voice file from a host device, storing the received TTS voice file, and searching the stored TTS voice file according to selection of a user, and outputting the searched TTS voice file.

## Description

The present invention relates to methods for supporting text-to-speech (TTS) navigation and multimedia devices using the same and, more particularly, but not exclusively, to methods for providing information on multimedia files by use of voice signals at a multimedia device such as a multimedia player instead of image signals displayed through a Liquid Crystal Display (LCD) screen and multimedia devices using the methods.

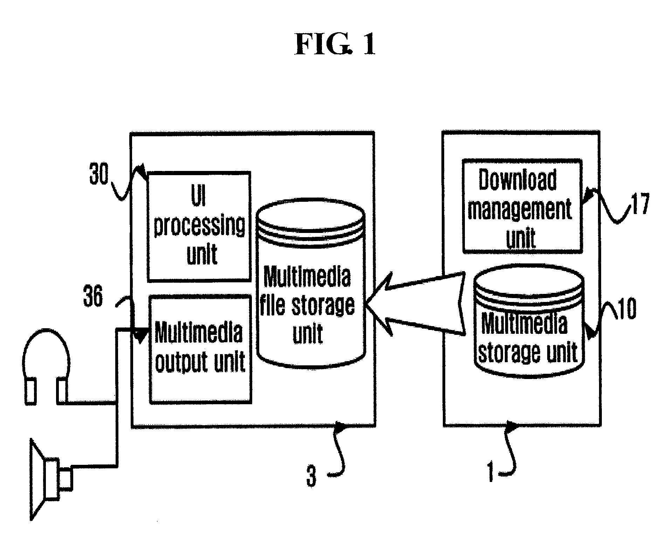

Figure 1 is a block diagram illustrating the operation between a multimedia device and a host device in the prior art.

As shown in Figure 1, in order to play a multimedia file, a download management unit 17 stores the multimedia file, which has been stored in a multimedia storage unit 10 of the host device 1, in a multimedia file storage unit of the multimedia device 3.

The multimedia file stored in the multimedia device 3 is played through a multimedia output unit 36 by allowing a user to manipulate a functional button, such as a Next/Previous button, of a User Interface (UI) processing unit 30.

However, when intending to select a desired media file according to the prior art, the user has no choice but to observe and search the desired media file through a character displayer of the UI unit, or to directly play and confirm the desired media file only though the corresponding content.

In addition, when the multimedia device has a built-in device for generating a Text-To-Speech (TTS) voice file, for example for providing TTS navigation, as disclosed in Korean Unexamined Patent Publication No. 2002-0048357, the production cost is increased, moreover the multimedia device requires a high-powered processor and mass storage space to provide the TTS navigation ensuring high voice quality.

It is an aim of preferred embodiments of the invention to provide a multimedia device that does not require a separate device or cost for the TTS navigation, so that a user of the multimedia device is able to search a multimedia file while hearing a voice without seeing a screen.

According to one aspect of the invention, there is provided a multimedia device supporting text-to-speech (TTS) navigation comprising a storage unit operable to store and transmit a TTS voice file which a host device generates as a result of analyzing at least one multimedia file; a user interface processor operable to provide a user interface and receive a command of a user to make it possible to search information on the file; and a data reader operable to read the text-to-speech voice file from the storage unit according to a control of the user interface processor in order to output the text-to-speech voice file.

According to another aspect of the invention, there is provided a method supporting text-to-speech navigation comprising: receiving input information of a user to extract location information of a text-to-speech voice file and stored from a host device; and outputting the text-to-speech voice file.
Further features of the present invention are set out in the appended claims.

The present invention will become more apparent from the following detailed description, by way of example only, when taken in conjunction with the accompanying drawings, in which:

Figure 1 is a block diagram illustrating an operation between a multimedia device and a host device in the prior art;

Figure 2 is a block diagram illustrating components of a host device needed to support TTS navigation at a multimedia device having a separate storage unit consistent with one exemplary embodiment of the invention;

Figure 3 is a block diagram illustrating a storage mode by which a text-to-speech voice file of a separate storage unit is stored consistent with one exemplary embodiment of the invention;

Figure 4 is a block diagram illustrating components needed to support TTS navigation at a multimedia device having a separate storage unit consistent with one exemplary embodiment of the invention;

Figure 5 is a block diagram illustrating components of a host device needed to support TTS navigation at a multimedia device having a built-in storage unit consistent with another exemplary embodiment of the invention;

Figure 6 is a block diagram illustrating components needed to support TTS navigation at a multimedia device having a built-in storage unit consistent with another exemplary embodiment of the invention;

Figure 7 is a block diagram illustrating a storage mode at a multimedia storage section of a built-in storage unit consistent with another exemplary embodiment of the invention;

Figure 8 is a flow chart illustrating the operation of a host device needed to provide TTS navigation at a multimedia device having a separate storage unit consistent with one exemplary embodiment of the invention;

Figure 9 is a flow chart illustrating the operation for providing TTS navigation at the multimedia device having a separate storage unit consistent with one exemplary embodiment of the invention;

Figure 10 is a flow chart illustrating the operation of a host device needed to provide TTS navigation at a multimedia device having a built-in storage unit consistent with another exemplary of the invention;

Figure 11 is a flow chart illustrating the process of downloading a file from a host device consistent with exemplary embodiments of the invention; and

Figure 12 is a flow chart illustrating the operation for providing TTS navigation at a multimedia device having a built-in storage unit consistent with another exemplary of the invention.

Exemplary embodiments of the invention will be described below in detail with reference to the accompanying drawings.

Multimedia devices are divided into two kinds according to a type of a storage unit for storing the multimedia file.

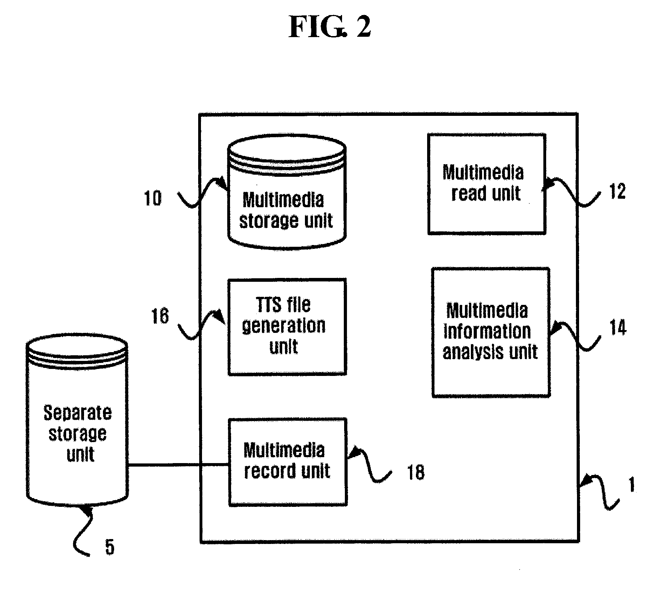

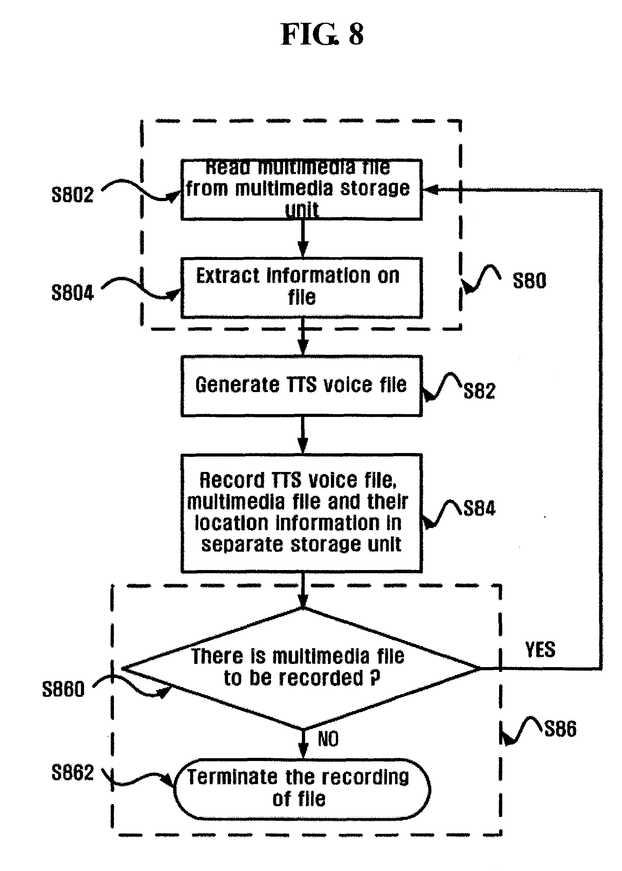

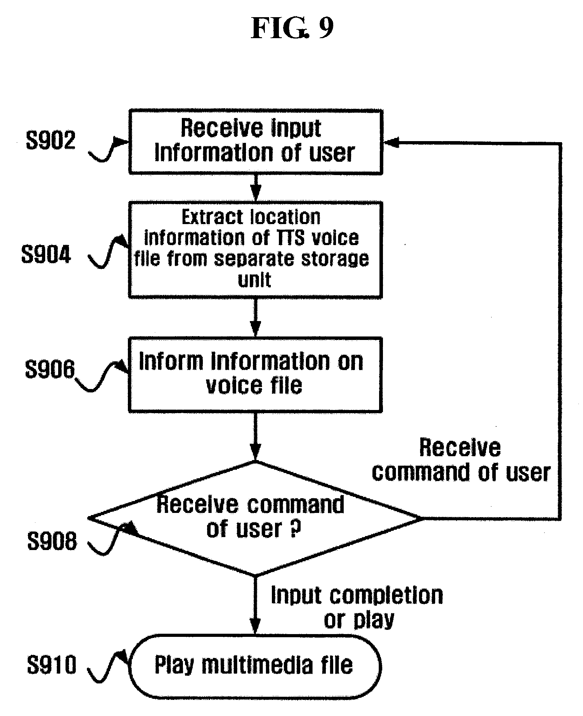

One kind of multimedia device is one having a separate storage unit (write-enable compact disc (CD)) like a CD player. In this case, the following description will be made regarding the multimedia device with reference to Figures. 2 to 4, and regarding the operation of the multimedia device with reference to Figures. 8 and 9.

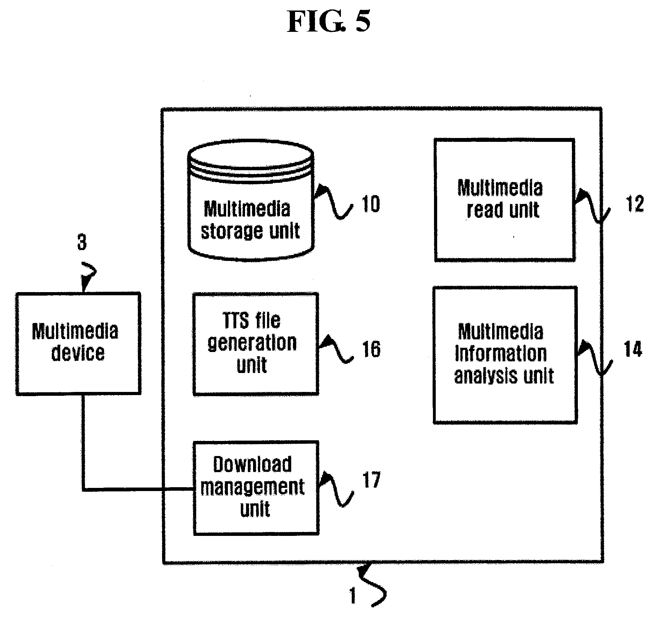

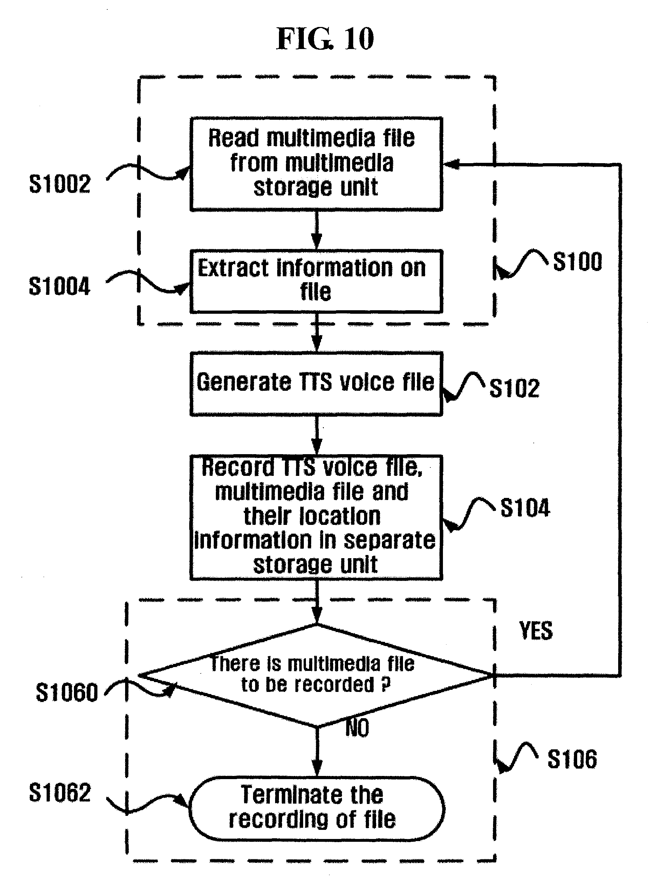

The other kind of multimedia device refers to one providing direct online connection to the host device to transmit a file through a download manager like an MP3 player. In this case, the following description will be made regarding the multimedia device with reference to Figures. 5 to 7, and regarding an operation of the multimedia device with reference to Figures. 10 to 12.

Hereinafter, the exemplary embodiment of the invention will be described in detail with reference to the drawings.

Figure 2 is a block diagram illustrating components of a host device needed to support TTS navigation at the multimedia device having a separate storage unit consistent with one exemplary embodiment of the invention.

As shown in Figure 2, the components of the host device 1 needed to support TTS navigation at the multimedia device having the separate storage unit, are comprised of a multimedia storage unit 10, a multimedia read unit 12, a multimedia information analysis unit 14, a TTS file generation unit 16 and a multimedia record unit 18.

The multimedia storage unit 10 receives and stores the multimedia file stored in the separate storage unit 5 of the multimedia device.

The multimedia read unit 12 reads meta data, such as a file name, information of a header and so on, through the multimedia file stored in the multimedia storage unit 10.

The multimedia information analysis unit 14 receives the meta data which the multimedia read unit 12 has read to generate a TTS voice file by means of the TTS file generation unit 16.

The multimedia record unit 18 records and stores the generated TTS voice file in the separate storage unit 5.

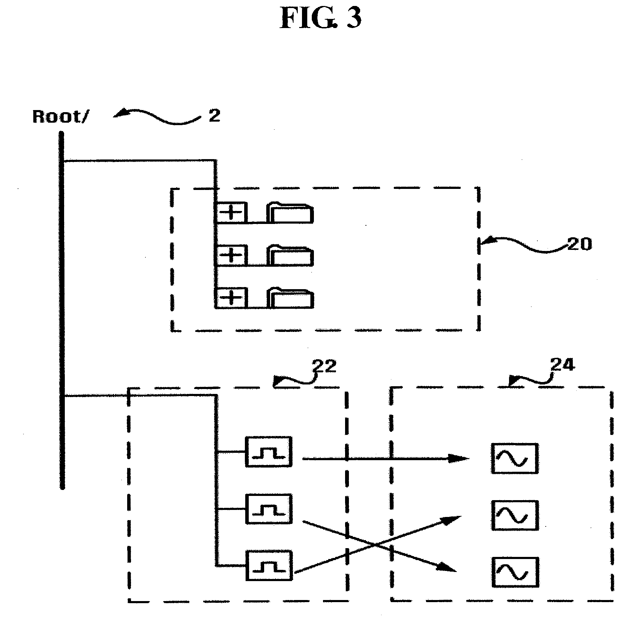

Figure 3 is a block diagram illustrating a storage mode by which a TTS voice file of a separate storage unit is stored consistent with one exemplary embodiment of the invention.

As shown in Figure 3, a general multimedia file group 20 is stored in a root directory or its subordinate directories in a file format. Files for providing TTS navigation may be realized in such a manner that they are stored in a file system having the same file format as the general multimedia file. For example, both a file group 22 having information on either a name of each TTS voice file or its stored location and a TTS voice file group 24 of the information are stored in a single or multiple file format of a prescribed directory like the mode in which the general multimedia file 20 is stored. In this manner, when the TTS voice files are stored in the separate storage unit such as a compact disc-read only memory (CD-ROM) at the multimedia device having the separate storage unit, for example at the MP3 CD player, a multimedia CD in which the TTS voice files are stored together with their information is also executed at another MP3 CD player capable of outputting the general multimedia files by forcing the file system to follow the generation standard of the defined file system, such as ISO 9660, so that it is possible to secure compatibility between the multimedia devices.

Further, when voice guidance information of the multimedia file as well as the TTS voice file for directory information is required, it is possible to add the TTS voice file for the directory information. For example, in case that the number of multimedia files is increased on the CD, there is a possibility of inconvenience in searching and outputting a specific multimedia file while the user hears the voice guidance information of the TTS voice file. In this case, if the TTS voice file for the directory information is added, the user can retrieve the directory while hearing the voice guidance information of the TTS voice file.

The TTS voice file, whether it contains the directory information or not, may be realized in such a manner that it is stored in a buffer memory of the multimedia device.

The buffer memory, in the case of the portable CD player, is used to pre-store a particular part of multimedia information against a shock caused by a user in action. Generally, the multimedia file stored in the buffer memory is used when such a shock is applied to the CD player and thus the multimedia file may not be read smoothly out from a CD rotating at a high speed. Further, the buffer memory is hardly used on retrieving. Hence, in the case where the TTS voice files are stored in the buffer memory in advance, the user is able to rapidly search the multimedia information contained in the CD while hearing the voice guidance information.

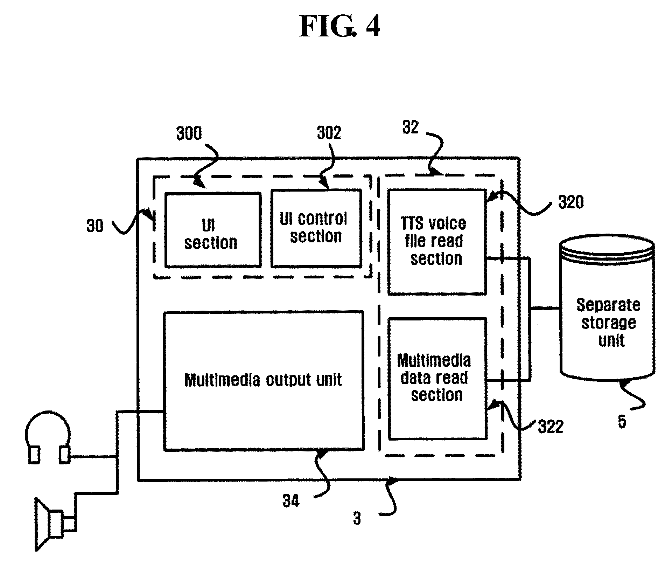

Figure 4 is a block diagram illustrating components needed to support TTS navigation at a multimedia device having a separate storage unit consistent with one exemplary embodiment of the invention.

As shown in Figure 4, the multimedia device 3 which has the separate storage unit and supports TTS navigation includes a separate storage unit 5 storing a TTS voice file, a UI processing unit 30 receiving user information and controlling the operation of the multimedia device, a data read unit 32 reading out data from the separate storage unit 5, and a multimedia output unit 34 outputting a signal of the TTS voice file.

The UI processing unit 30 consists of a UI section 300 and a UI control section 302. The UI section 300 provides a user interface for a user and functions to receive the resultant command of the user. The UI control section 302 interprets input information of the user, and reads the TTS voice file stored in the separate storage unit 5 by means of a TTS voice file read section 320 of the data read unit 32, so that the UI control section 302 makes it possible to search information on the file.

The data read unit 32 includes the TTS voice file read section 320 and a multimedia data read section 322. The TTS voice file read section 320 functions to read the TTS voice file from the separate storage unit 5 according to the control of the UI control section 302 over the input command of the UI section 300. The multimedia data read section 322 reads the TTS voice file from the separate storage unit 5.

The multimedia output unit 34 outputs the TTS voice file.

Figure 5 is a block diagram illustrating components of a host device needed to support TTS navigation at a multimedia device having a built-in storage unit consistent with another exemplary embodiment of the invention.

As shown in Figure 5, the components of the host device 1 needed to support TTS navigation at the multimedia device having the built-in storage unit, are comprised of a multimedia storage unit 10, a multimedia read unit 12, a multimedia information analysis unit 14, a TTS file generation unit 16, and a download management unit 17.

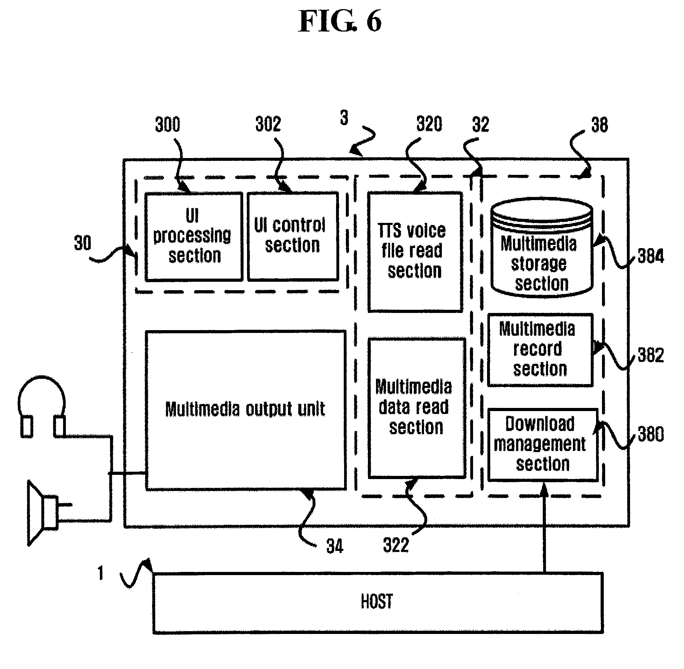

The multimedia storage unit 10 reads and stores the multimedia file stored in a built-in storage unit 38 (see Figure 6) of the multimedia device 3.

The download management unit 17 records and stores the TTS voice file in the built-in storage unit 38.

The multimedia read unit 12, the multimedia information analysis unit 14 and the TTS file generation unit 16 are the same configuration as that described with reference to Figure 2

Figure 6 is a block diagram illustrating components needed to support TTS navigation at a multimedia device having a built-in storage unit consistent with another exemplary embodiment of the invention.

As shown in Figure 6, the multimedia device which has the built-in storage unit and supports the TTS navigation includes a built-in storage unit 38 storing a TTS voice file, a UI processing unit 30 receiving user information and controlling the operation of the multimedia device, a data read unit 32 reading out data from the built-in storage unit 38, and a multimedia output unit 34 outputting the TTS voice file.

The data read unit 32 includes a TTS voice file read section 320 and a multimedia data read section 322. The TTS voice file read section 320 functions to read the TTS voice file from the built-in storage unit 38 according to the control of a UI control section 302 of the UI processing unit 30 on the input command of a UI section 300 of the UI processing unit 30. The multimedia data read section 322 reads the TTS voice file from the built-in storage unit 38.

The built-in storage unit 38 includes a download management section 380, a multimedia record section 382 and a multimedia storage section 384.

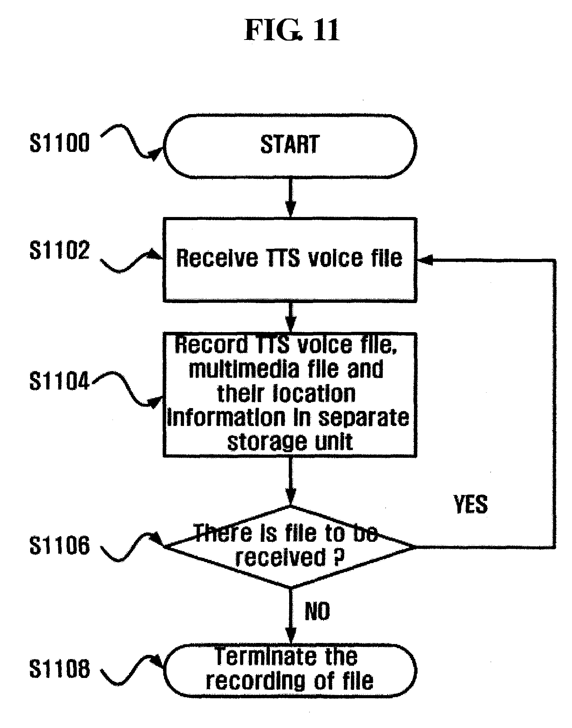

The download management section 380 takes charge of transmission of the TTS voice file from the host device 1. A process of transmitting the TTS voice file will be described below with reference to Figure 11.

The multimedia record section 382 records the TTS voice file received from the host device 1 in the multimedia storage section 384.

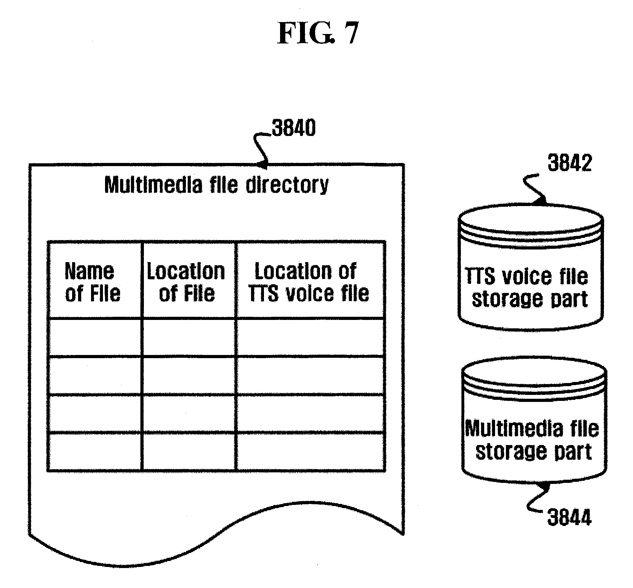

The multimedia storage section 384 is comprised of a multimedia file directory 3840, a TTS voice file storage part 3842, and a multimedia file storage part 3844. See Figure 7.

The UI processing unit 30 and the multimedia output unit 34 are the same configuration as that described with reference to Figure 4.

Figure 7 is a block diagram illustrating a storage mode at a multimedia storage section of a built-in storage unit consistent with another exemplary embodiment of the invention.

As shown in Figure 7, the multimedia files, the TTS voice files and the multimedia file directory 3840 are stored in the multimedia storage section 384. The TTS voice files are stored in the TTS voice file storage part 3842. The general multimedia files are stored in the multimedia file storage part 3844. It is the TTS voice file that provides meta data (e.g., a title, an album name, a manufacturer etc.) of the multimedia file in the form of speech. This may be realized either through a memory that is physically separated from the TTS voice file storage part 3842, or through separation of a storage area in the memory.

The multimedia file directory 3840 refers to a table containing information not only on a name of the multimedia file and its storage location but also on a storage location of the TTS voice file, in which these information are used to provide a service for the TTS navigation. The multimedia file directory 3840 has a conceptual structure, which may be realized into the table form as well as another form (e.g., a tree form, a connection list, and so forth) capable of expressing information of the name, the storage location etc.

It is possible to realize the multimedia file directory 3840 to be stored in a memory area, which is distinguished from a memory area in which the multimedia file or the TTS voice file is stored. Information of the multimedia file directory 3840 allows the name and storage location of the multimedia file, the storage location of the TTS voice file, etc. which are stored in the storage section in reality to be rapidly searched.

Figure 8 is a flow chart illustrating the operation of a host device needed to provide TTS navigation at a multimedia device having a separate storage unit consistent with one exemplary embodiment of the invention.

As shown in Figure 8, the operation of the host device for providing TTS navigation at the multimedia device having the separate storage unit includes a step S80 of extracting information on files, a step S82 of generating a TTS voice file, a step S84 of storing the files, and a step S86 of terminating the recording of the files.

The step S80 of extracting information on files consists of a step S802 of reading files stored in the storage unit 10 and a step S804 of extracting the information on the files.

The step S82 of generating a TTS voice file consists of a step of, at the multimedia read unit 12, analyzing information on a name or header of the multimedia file to generate a meta file in a text format, and a step of, at the TTS file generation unit 16, generating the TTS voice file from the meta file.

In the step S84 of storing the files, the generated TTS voice file and multimedia file as well as location information representing locations of the TTS voice file and the multimedia file are recorded in the separate storage unit 5.

The step S86 of terminating the recording of the files terminates the recording of the files when there is no multimedia file to be recorded.

Figure 9 is a flow chart illustrating operation for providing TTS navigation at the multimedia device having a separate storage unit consistent with one exemplary embodiment of the invention.

As shown in Figure 9, the operation for providing TTS navigation at the multimedia device having the separate storage includes a step S902 of receiving input information of a user from the UI processing unit 30, a step S904 of, at the UI control section 302, analyzing the input information of the user to extract information on the location of a TTS voice file, a step S906 of outputting the TTS voice file based on the extracted information to inform the user of information on the TTS voice file, a step S908 of receiving a command of the user according to the information on the TTS voice file, and a step S910 of playing the multimedia file of the information according to selection of the user.

Figure 10 is a flow chart illustrating the operation of a host device needed to provide TTS navigation at a multimedia device having a built-in storage unit consistent with another exemplary of the invention.

As shown in Figure 10, the operation of the host device for providing TTS navigation at the multimedia device having the built-in storage unit includes a step S100 of extracting information on files, a step S102 of generating a TTS voice file, a step S104 of storing the files, and a step S106 of terminating the recording of the files.

The step S100 of extracting information on files consists of a step S1002 of reading files from the multimedia storage unit 10 of the host device and a step S1004 of extracting the information on the files. In the step S104 of storing the files, the generated TTS voice file is recorded in the built-in storage unit 38. The step S102 of generating the TTS voice file and the step S106 of terminating the recording of the files are the same configuration as that described with reference to Figure 8.

Figure 11 is a flow chart illustrating a process of downloading a file from a host device consistent with exemplary embodiments of the invention.

As shown in Figure 11, the process of downloading the file from the host device includes a step S1102 of receiving a TTS voice file, a multimedia file and location information representing locations of the TTS voice file and multimedia file from the host device 1, a step 1104 of recording the received files in the built-in storage unit, a step S1106 of determining whether there is a file to be received, and a step 1108 of terminating the recording of the files when there is no file to be received.

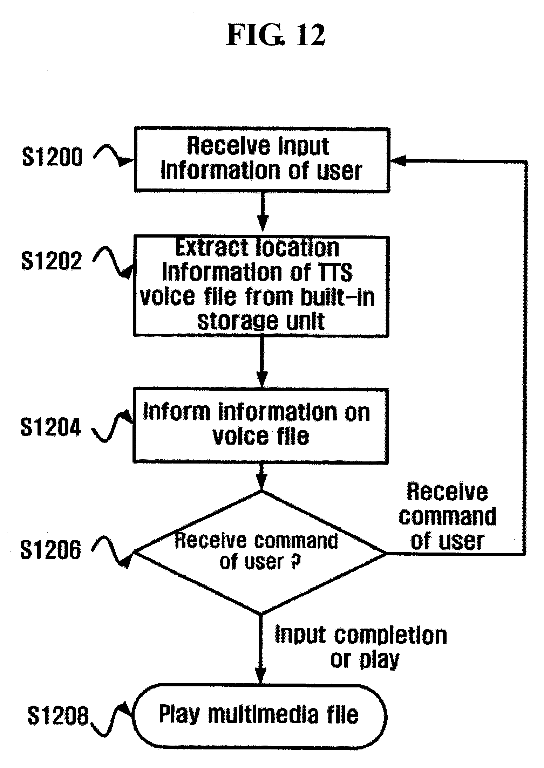

Figure 12 is a flow chart illustrating the operation for providing TTS navigation at a multimedia device having a built-in storage unit consistent with another exemplary of the invention.

As shown in Figure 12, the operation for providing TTS navigation at the multimedia device having the built-in storage unit 38 includes a step S1200 of receiving input information of a user from the UI processing unit 30, a step S1202 of, at the UI control section 302, analyzing the input information of the user to extract information on the location of a TTS voice file, a step S1204 of outputting the TTS voice file to inform the user of information on the TTS voice file, a step S1206 of receiving a command of the user according to the information on the TTS voice file, and a step S1208 of playing the multimedia file of the information according to selection of the user.

According to preferred embodiments of the invention, it is possible to provide the multimedia device that does not require a separate device or cost for the TTS navigation, so that a user of the multimedia device is able to search the multimedia file while hearing a desired voice without seeing a screen.

While the invention has been shown and described with reference to a certain exemplary embodiment thereof, it will be understood by those skilled in the art that various changes in form and details may be made therein without departing from the spirit and scope of the invention as defined by the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A multimedia device supporting text-to-speech (TTS) navigation, comprising:
a storage unit (5) operable to store and transmit a TTS voice file which a host device generates as a result of analyzing at least one multimedia file ;
a user interface processor (30) operable to provide a user interface and receive a command of a user to make it possible to search information on the file; and
a data reader (32) operable to read the text-to-speech voice file from the storage unit according to a control of the user interface processor in order to output the text-to-speech voice file.

2. The multimedia device as claimed in claim 1, wherein the host device comprises a multimedia information analyzer (14) operable to analyze multimedia information, a text-to-speech voice file generator operable to generate the text-to-speech voice file from the analyzed information, and a multimedia recorder (18) operable to store the text-to-speech voice file in the storage of the multimedia device.

3. The multimedia device as claimed in claim 1 or claim 2, wherein, when the storage of the multimedia device is constructed as a separate storage operable to store the files according to a standard of a file system, the file received from the host device is stored in a memory area assigned as an anti-shock buffer memory of the separate storage .

4. The multimedia device as claimed in claim 1 or claim 2, wherein the storage of the multimedia device is constructed as a built-in memory capable of storing a multimedia file directory containing the multimedia file, the text-to-speech voice file and information on the multimedia file and text-to-speech voice file.

5. A method supporting text-to-speech navigation comprising :
receiving input information of a user to extract location information of a text-to-speech voice file received and stored from a host device; and
outputting the text-to-speech voice file.

6. The method as claimed in claim 5, wherein receiving input information of the user to extract location information of the text-to-speech voice file received and stored from the host device comprises extracting information from the text-to-speech voice file stored in a memory area assigned as an anti-shock buffer memory of a separate storage unit.

7. The method as claimed in claim 5 or claim 6, wherein receiving input information of the user to extract location information of the text-to-speech voice file received and stored from the host device comprises extracting information from a multimedia file directory, the multimedia file directory containing the multimedia file, the text-to-speech voice file, and information on the multimedia file and text-to-speech voice file, which are stored in a built-in memory.
